(19) Europäisches Patentamt
European Patent Office
Office européen des brevets

(11) **EP 3 959 062 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **20720047.8**

(22) Anmeldetag: **20.04.2020**

(51) Internationale Patentklassifikation (IPC):
**B29C 64/106** *(2017.01)*      **B33Y 70/00** *(2020.01)*

(52) Gemeinsame Patentklassifikation (CPC):
**B29C 64/205; B29C 64/106; B29C 64/295; B29C 64/321; B33Y 10/00; B33Y 30/00; B33Y 70/00**

(86) Internationale Anmeldenummer:
**PCT/EP2020/060985**

(87) Internationale Veröffentlichungsnummer:
**WO 2020/216710 (29.10.2020 Gazette 2020/44)**

(54) **ADDITIVES FERTIGUNGSVERFAHREN ZUR HERSTELLUNG EINES FORMKÖRPERS AUS ELASTOMER**

ADDITIVE MANUFACTURING METHOD FOR PRODUCING A MOULDED ARTICLE FROM ELASTOMER

PROCÉDÉ DE FABRICATION ADDITIVE PERMETTANT DE PRODUIRE UN CORPS FAÇONNÉ À PARTIR D'UN ÉLASTOMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2019   DE 102019110718**

(43) Veröffentlichungstag der Anmeldung:
**02.03.2022   Patentblatt 2022/09**

(73) Patentinhaber: **Freudenberg SE**
**69469 Weinheim (DE)**

(72) Erfinder:
• **KAUL, Stefan**
**69502 Hemsbach (DE)**
• **SCHMITT-FERRARESE, Sebastian**
**69493 Hirschberg (DE)**
• **ANDERS, Britta**
**69509 Mörlenbach (DE)**
• **FIEBIGER, Jens**
**69514 Laudenbach (DE)**
• **BITTNER, Denis**
**65474 Bischofsheim (DE)**

(74) Vertreter: **Fritz, Martin Richard**
**Carl Freudenberg KG**
**Höhnerweg 2-4**
**69469 Weinheim (DE)**

(56) Entgegenhaltungen:
WO-A1-2018/153467      WO-A1-2019/063094
US-A1- 2018 207 863      US-A1- 2018 208 797

**Beschreibung**

Die Erfindung betrifft ein Fertigungsverfahren zur Herstellung eines Formkörpers gemäß den Merkmalen von Anspruch 1.

Stand der Technik

Die Extrusion, das Dosieren und das Spritzgießen von Elastomerformmassen werden in der Industrie standardmäßig eingesetzt, z.B. zur Herstellung von Dichtungen und Membranen. In Extrudern aufbereitetes Elastomer wird mittels Düsen in Spritzgussformen eingebracht. Dabei kommen kleine Düsen mit mittleren Kanaldurchmessern von 1-5 mm zum Einsatz. Der Druckverlust innerhalb der Düse ist stark von der Düsengeometrie und dem Durchsatz, sowie von der Materialviskosität abhängig.

Es ist auch allgemein bekannt und zunehmend verbreitet unterschiedlichste Materialien im sogenannten 3D-Druck zu verarbeiten und in einem additiven Fertigungsverfahren Produkte zu fertigen. So ist eine Anlage zum schichtweisen Aufbau von Produkten aus thermoplastischen Materialien in additiver Fertigung bekannt. Eine solche Anlage ist beispielsweise beschrieben in der DE 10 2009 030 099 A1, der EP 1 886 793 B1 und der EP 2 782 742 81 B1.

Die WO 2018 /153467 A1 beschreibt ein additives Verfahren zur Herstellung von Formkörpern, wobei flüssiges Silikon als strukturbildendes Material und Wachs als Stützmaterial verwendet werden.

Die US 2018/0208797 A1 offenbart ein Jettingverfahren, in welchem Silikongummi tröpfchenweise im DOD-Verfahren ballistisch gedruckt und so Objekte gebildet werden.

Ein weiteres Verfahren zur Herstellung eines Formkörpers ist aus der WO 2019/ 063094 A1 bekannt.

Aufgabenstellung

Aufgabe der vorliegenden Erfindung ist es ein Verfahren zur Herstellung eines Formkörpers zu beschreiben durch welches Formkörper aus nicht-thermoplastischem Elastomermaterial hergestellt werden können. Weitere Aufgabe ist es, dass durch das Verfahren auch Formkörper mit besonders feinen Strukturen hochgenau gefertigt werden können.

Technische Lösung

Gelöst wird diese Aufgabe durch ein Fertigungsverfahren zur Herstellung eines Formkörpers mit den Merkmalen von Anspruch 1.

Erfindungsgemäß wurde als vorteilhaft erkannt nicht-thermoplastisches Elastomermaterial in einem additiven Fertigungsverfahren zu verarbeiten und dabei Formkörper herzustellen.

Das erfindungsgemäße Verfahren dient als additives Fertigungsverfahren zur Herstellung eines dreidimensionalen Formkörpers aus nicht-thermoplastischem Elastomermaterial aus mindestens einer Schicht. Bei dem Material handelt es sich also um ein kautschukartiges Material unter Ausschluss von thermoplastischen Elastomeren. Das Verfahren weist nachfolgende Schritte auf:

a) Zuführen eines Elastomermaterials als Rohmaterial in Form eines Fells (d.h. einer Matte aus Elastomermaterial), eines Streifens, eines Pucks (d.h. einer Scheibe aus Elastomermaterial) oder einer Schnur zu einer Aufbereitungseinheit.
b) Aufbereitung des Elastomermaterials in der Aufbereitungseinheit und Erzeugung eines Materialstroms des Elastomers, wobei eine thermische und stoffliche Homogenisierung erfolgt und dabei auch eine bestimmte Viskosität des Elastomermaterials erzeugt werden kann.
c) Fördern des Elastomermaterials in eine Speichereinheit und Erzeugung eines Vordrucks des Elastomermaterials in der Speichereinheit. Der Vordruck liegt dabei insbesondere in einem Bereich von unter 600 bar und ist abhängig vom verarbeiteten Material.
d) Fördern des Elastomermaterials zu einer Formeinheit, in welcher das Elastomermaterial gezielt ausgebracht wird zur Erzeugung von mindestens einer Schicht des zu bildenden Formkörpers und so zur schichtweisen Formgebung des Formkörpers. Das Elastomermaterial wird dabei insbesondere mit einem Massestrom im Bereich von 0,5 - 30 g/h gefördert.
e) Vernetzung der mindestens einen Schicht des Formkörpers oder des gesamten Formkörpers durch eine Vernetzungseinheit, wobei die Vernetzung thermisch, optisch oder chemisch erfolgen kann.

Die Verfahrensschritte a) bis e) können insbesondere in einer Maschine, einer Vorrichtung zur Herstellung eines Formkörpers, abgearbeitet werden. Alternativ kann die Vorrichtung zur Herstellung eines Formkörpers so ausgestaltet sein, dass der Schritt e) in einer separaten, beabstandet angeordneten Einrichtung erfolgen kann, nämlich dann, wenn eine Vernetzung des gesamten Formkörpers erfolgt.

Bei dem Elastomermaterial handelt es sich um ein nicht-thermoplastisches Elastomermaterial gemäß der Norm ASTM D1418 - 17 "Standard Practice for Rubber and Rubber Latices-Nomenclature".

Die technisch interessanten Eigenschaften des nicht-thermoplastischen Elastomermaterials werden erst durch das Compoundieren erreicht. Unter Compoundieren versteht man die Zugabe von bestimmten Additiven, z.B.: Füllstoffe, Alterungsschutzmittel, Weichmacher, Verarbeitungshilfen, Vernetzungschemikalien, etc. Art und Menge der Additive richten sich nach dem jeweils geforderten Eigenschaftsprofil des Werkstoffes. Bei dem Vernetzungsvorgang, der sogenannten Vulkanisation des nicht-thermoplastischen Elastomermaterials, werden irreversible, chemische Vernetzungsstellen gebildet.

Diese hochpolymeren, organischen Netzwerke weisen eine hohe Elastizität auf und sind in der Lage reversibel große Verformungen auszuführen.

Bei dem Elastomermaterial, welches in Schritt c) in die Speichereinheit gefördert wird, handelt es sich um ein fertig gemischtes Material, welchem keine weiteren Stoffe mehr hinzugesetzt werden.

Besonders bevorzugt handelt es sich bei dem nicht-thermoplastischen Elastomermaterial um ein Material, welches aus chemisch vernetztem Kautschuk besteht.

Beim erfindungsgemäßen Verfahren ist das Elastomermaterial während den Schritten a) bis d) hochviskos, also nicht flüssig, und ist auch vernetzbar. Das Elastomermaterial weist eine Viskosität, d.h. einen Widerstand gegenüber Scherung im Bereich von 100 bis 1.000.000 Pa s auf. Damit liegt eine Viskosität vor, welche z.B. im Vergleich zu im Spritzgießverfahren verarbeiteten Thermoplasten deutlich höher ist.

Dass ein solches Verfahren mit nicht-thermoplastischem Elastomermaterial funktioniert ist überraschend: Die Berechnung von Druckverlusten von durch eine Düse transportiertem Material ist unter anderem in dem Fachbuch "Extrusionswerkzeuge für Kunststoffe und Kautschuke, Michaeli, 2. Auflage, Kapitel 2.1 und Kapitel 3.1" beschrieben.

Die Druckverlustberechnung basiert auf dem Hagen-Poiseuille-Gesetz für laminare Strömung eines inkompressiblen viskosen Fluids durch ein Rohr:

$$\Delta p = \frac{8 \, \dot{V} \eta \, l}{\pi \, r^4}$$

$\Delta \dot{V}$ = Volumenstrom durch das Rohr [m³/s]
$\Delta p$ = Druckdifferenz zwischen Anfang und Ende eines Rohres [Pa]
$r$ = Innenradius des Rohres [m]
$l$ = Länge des Rohres [m]
$\eta$ = Viskosität der strömenden Flüssigkeit [Pa s]

Für die Herstellung und z.B. Dosierung von Strängen mit einem keinen Durchmesser mit Standard-Elastomercompounds und üblichen Viskositäten werden gemäß den üblichen Rechengesetzen aus der Literatur sehr hohe Drücke von circa 700 bis weit über 10.000 bar benötigt, um Masseströme von 0,5 - 30 g/h zu erreichen. Derart hohe Drücke wären jedoch nur schwerlich zu erzeugen und wären nicht praktikabel. Es wurde überraschend gefunden, dass auch geringere Drücke ausreichen, um Elastomermaterial in einer Formeinheit zu formen und auszubringen. Das liegt daran, dass der tatsächliche Druckverlust von Elastomermaterial bei der Förderung durch eine Formeinheit, z.B. eine feine Düse, deutlich niedriger ist, als nach fachüblicher Berechnung zu erwarten gewesen wäre.

In besonders vorteilhafter und daher bevorzugter Weiterbildung des Verfahrens ist das verwendete Elastomermaterial nicht verfestigbar und dabei elastisch oder viskoelastisch. D.h. das Elastomermaterial nimmt nie eine feste Phase an, sondern behält seine elastische oder viskoelastische Eigenschaft bei.

Bei dem Elastomermaterial kann es sich beispielsweise um Polyacrylat-Kautschuk (ACM), Nitrilkautschuk (NBR), Ethylen-Propylendien-Kautschuk (EPDM) oder Festsilikonkautschuk (High Consistency Rubber HCR) handeln.

In möglicher Ausgestaltung des Verfahrens erfolgt in Schritt b) die Aufbereitung des Elastomermaterials unter Verwendung einer oder mehrerer Schnecken und/oder einer Kolbenpumpe und/oder einer Zahnradpumpe und/oder eines statischen Mischers.

Es hat sich als besonders vorteilhaft erwiesen in Schritt b) und/oder in Schritt d) eine Kontrolle und Regelung der Temperatur des Elastomermaterials durchzuführen auf über 20°C und unter 150°C, insbesondere auf unter 90°C und im Fall der Verarbeitung von HCR auf unter 35°C. Ein vorzeitiges Vernetzen des Elastomermaterials kann so verhindert werden. Damit liegt eine Temperatur vor, welche z.B. im Vergleich zu im Spritzgießverfahren verarbeiteten Thermoplasten deutlich geringer ist.

Dazu kann die Aufbereitungseinheit und/oder die Formeinheit eine Temperiereinrichtung besitzen zum Kühlen und/oder Erhitzen des Elastomermaterials.

Die Formeinheit in Schritt d) ist als getaktete Düse ausgeführt.

Die getaktete Düse besitzt ein getaktet ansteuerbares Verschlussmittel, sodass abwechselnd Elastomermaterial durch die Düse gepresst und die Düse dann wieder verschlossen wird. Besonders vorteilhaft erscheint es, wenn die Düse einen Durchmesser von unter 0,25mm aufweist. So können Formkörper mit besonders feinen Strukturen erzeugt werden.

Es hat sich als vorteilhaft erwiesen, wenn das Elastomermaterial im Bereich der Düse eine Schergeschwindigkeit von 10 bis 5500 1/s aufweist. Dann sind die vorherrschenden Druckverluste relativ gering. Die Schergeschwindigkeit wird auch als Scherrate bezeichnet.

Das Elastomermaterial wird in Schritt d) des Verfahrens in sequenzieller Form in Form einer Perlenkette ausgebracht. Die Perlenkette zeichnet sich durch eine Aneinanderreihung von Perlen, nämlich durch einen sich perlenförmig ändernden Durchmesser an einem Strang aus. Der Durchmesser kann dabei um 1 bis 15% variieren. Perlenketten mit einem mittleren Durchmesser von unter 1mm, insbesondere von unter 0,3mm sind dabei bevorzugt.

Die Geometrie und Packdichte der Perlenkette kann durch die Taktfrequenz des Verschlussmittels der getakteten Düse eingestellt und angepasst werden. Es hat sich herausgestellt, dass durch eine Perlenkette besonders feine Strukturen des Formkörpers realisiert werden können. Ein weiterer Vorteil ergibt sich, weil Ecken im Formkörper einfacher erzeugt werden können als beispielsweise, wenn das Elastomermaterial in Form eines Stranges ausgebracht wird. Auch vorteilhaft erscheint, dass bei Perlenketten im Vergleich zu Strängen eine engere Packungsdichte des Elastomermaterials im Formkörper erreicht werden kann.

Bei dem erfindungsgemäßen Verfahren kann in den Schritten d) und e) eine Relativbewegung zwischen der Formeinheit bzw. der Vernetzungseinheit und einer Formaufnahmeeinheit, d.h. einem Träger für den herzustellenden Formkörper, erfolgen zur Positionierung des ausgebrachten Elastomermaterials bzw. zur Positionierung des Wirkbereichs der Vernetzungseinheit. Das ausgebrachte Elastomermaterial kann so gezielt auf die Formaufnahmeeinheit oder eine sich dort bereits befindliche Elastomerschicht abgelegt werden. Präzisionspositioniersysteme, welche eine Mehrachspositionierung und damit die erforderliche Relativbewegung ermöglichen, sind der Fachwelt bekannt.

In einer vorteilhaften Variante des erfindungsgemäßen Verfahrens werden die Schritte d) und e) abwechselnd wiederholt, um einzelne Schichten des Formkörpers aufzubauen und zu vernetzen, bevor eine jeweils nächste Schicht aufgebracht wird.

In einer vorteilhaften Variante des erfindungsgemäßen Verfahrens erfolgt in einem zusätzlichen Schritt ein Ausbringen von Stützmaterial zur Erzeugung eines Stützbereichs, wobei die Schritte Ausbringen Elastomermaterial und Ausbringen Stützmaterial abwechselnd erfolgen, abhängig von der Geometrie des zu erzeugenden Formkörpers. Das Stützmaterial bildet dann die Tragstruktur für nachfolgend ausgebrachte Schichten von Elastomermaterial. Das Stützmaterial wird so gewählt, dass es später einfach wieder entfernt werden kann. Es kann z.B. wasserlöslich sein oder in einer Lauge, die das Elastomermaterial nicht angreift, löslich sein. So können in vorteilhafter Weise auch Formkörper mit komplexer Geometrie erzeugt werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegende Figur verwiesen.

Ausführungsbeispiel

In Versuchen wurden bei den folgenden Geometrien, Materialien und Viskositäten die beschriebenen Druckverluste erzielt. Theoretische Druckverluste liegen bei den angegebenen, wesentlichen höheren Werten:

| Material | Viskosität in [Pas] bei T [°C] und $\dot{\gamma}$ [1/s] | Durchmesser D [mm] | L/D | Volumenstrom $\dot{V}$ [mm3/s] | Druckverlust, theoretisch [bar] | Druckverlust, praktisch [bar] |
|---|---|---|---|---|---|---|
| 70 NBR | 1100 T= 90 $\dot{\gamma}$ = 2002 | 0,25 | 10 | 0,628 | 2000 | 380 |
| $\dot{\gamma}$ Schergeschwindigkeit T Temperatur D Durchmesser der Düse L/D Längen-Durchmesser-Verhältnis der Düse | | | | | | |

Die in praktischen Versuchsreihen gemessenen Druckverluste bei weiteren Materialien (mehrere Hundert Bar) in sehr feinen Düsen mit einem Durchmesser von unter 0,3 mm waren im Vergleich zu den berechneten Druckverlusten (mehrere Tausend Bar) wesentlich geringer. Durch diese Versuchsreihen konnte also bestätigt werden, dass Elastomermaterial durch Formeinheiten, wie z.B. dünne Düsen, gepresst und so ein Formkörper aus Elastomermaterial in additivem Fertigungsverfahren hergestellt werden kann.

Die Erfindung soll an Hand beigefügter Figur noch näher erläutert werden. Zugunsten einer besseren Übersichtlichkeit der Figur wurde auf eine maßstabsgetreue Darstellung verzichtet.

Es zeigt in schematischer Darstellung

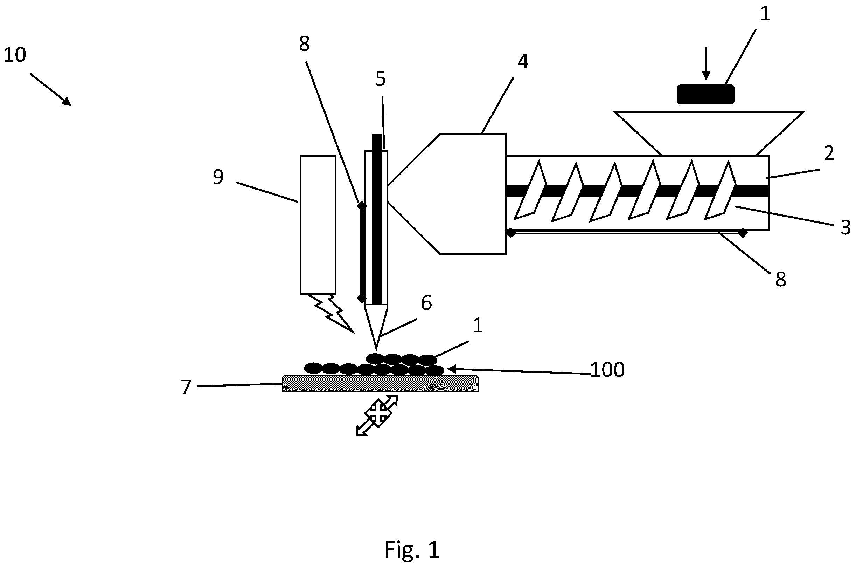

Fig. 1 eine Vorrichtung zur Herstellung eines Formkörpers in einem additiven Fertigungsverfahren

In der Figur ist eine Vorrichtung 10 zur Herstellung eines Formkörpers 100 dargestellt, in welcher in einem additiven Fertigungsverfahren aus einem Elastomermaterial 1 ein Formkörper 100 hergestellt wird. Dazu wird Elastomermaterial 1 einer Aufbereitungseinheit 2 zugeführt und dort mittels einer Schnecke 3 aufbereitet.

Das so aufbereitete Elastomermaterial 1 wird einer Speichereinheit 4 zugeführt, durch welche es einer Formeinheit 5 mit einer Düse 6 bereitgestellt wird.

Eine Formaufnahmeeinheit 7 ist unterhalb der Düse 6 angeordnet und frei beweglich. Auf dieser wird aus der Düse 6 austretendes Elastomermaterial 1 abgelegt und so der Formkörper 100 ausgebildet. Eine Vernetzungseinheit 9 ist in der Nähe der Düse 6 angeordnet und dient der Vernetzung der Schichten aus Elastomermaterial 1. Der Aufbereitungseinheit 2 und der Formeinheit 5 kann je eine Temperiereinrichtung 8 zugeordnet sein, zur Regelung der Temperatur des Elastomermaterials 1 in Aufbereitungseinheit 2 und Formeinheit 5.

In einer alternativen, nicht dargestellten Ausführungsform werden die Düse 6 und evtl. auch die Vernetzungseinheit 9 relativ zur Formaufnahmeeinheit 7 bewegt.

Die Vernetzungseinheit 9 könnte auch separat und beabstandet zu den anderen Komponenten der Vorrichtung 10 angeordnet sein, nämlich dann, wenn der gesamte Formkörper 100 als Ganzes vernetzt werden soll.

Mit der Vorrichtung 10 zur Herstellung eines Formkörpers 100 kann das erfindungsgemäße Verfahren durchgeführt werden.

In einem ersten Schritt erfolgt ein Zuführen eines Elastomermaterials 1 zu einer Aufbereitungseinheit 2. In der Aufbereitungseinheit 2 wird eine Aufbereitung des Elastomermaterials 1 durchgeführt und ein Materialstrom des Elastomermaterials 1 erzeugt. Die Aufbereitung des Elastomermaterials 1 erfolgt unter Verwendung einer Schnecke 3, welche das Elastomermaterial 1 in eine Speichereinheit 4 fördert, wo ein Vordruck aufgebaut wird, der zur Ausbringung des Elastomermaterials 1 durch eine Formeinheit 5 genügt. In der Formeinheit 5, welche als getaktete Düse 6 ausgebildet ist, wird das Elastomermaterial 1 gezielt in sequenzieller Form einer Perlenkette ausgebracht. So wird eine Schicht des zu bildenden Formkörpers 100 auf einer Formaufnahmeeinheit 7 abgelegt. Die Aufbereitungseinheit 2 und die Formeinheit 5 besitzen eine Temperiereinrichtung 8 zum Kühlen und/oder Erhitzen des Elastomermaterials 1, sodass eine Kontrolle und Regelung der Temperatur des Elastomermaterials 1 erfolgt auf über 20°C und unter 150°C. Ein vorzeitiges Vernetzen des Elastomermaterials kann so verhindert werden.

Eine Vernetzung der mindestens einen Schicht des Formkörpers 100 erfolgt in einem nächsten Schritt durch eine Vernetzungseinheit 9. Abwechselnd werden Ausbringen des Elastomermaterials 1 und Vernetzen der Schicht wiederholt, um einzelne Schichten des Formkörpers 100 aufzubauen und zu vernetzen bis der Formkörper 100 fertiggestellt ist.

Wie durch Doppelpfeile angedeutet wird eine Relativbewegung zwischen der Formeinheit 5 und einer Formaufnahmeeinheit 7 ermöglicht zur Positionierung des ausgebrachten Elastomermaterials 1.

Wie durch Doppelpfeile angedeutet wird auch eine Relativbewegung zwischen der Vernetzungseinheit 9 und einer Formaufnahmeeinheit 7 ermöglicht zur Positionierung des Wirkbereichs der Vernetzungseinheit 9.

In einer alternativen, nicht dargestellten Ausführungsform des Verfahrens werden die Düse 6 und evtl. auch die Vernetzungseinheit 9 relativ zur Formaufnahmeeinheit 7 bewegt.

Die Vernetzungseinheit 9 könnte auch separat und beabstandet zu den anderen Komponenten der Vorrichtung 10 angeordnet sein, nämlich dann, wenn der gesamte Formkörper 100 als Ganzes vernetzt werden soll. Dann erfolgt zwischen dem Schritt "Elastomermaterial 1 Ausbringen" zur Ausbildung des Formkörpers und dem Schritt "Vernetzen" ein Transport des Formkörpers 100 zur Vernetzungseinheit 9.

Bezugszeichenliste

1    Elastomermaterial
2    Aufbereitungseinheit
3    Schnecke

4       Speichereinheit
5       Formeinheit
6       Düse
7       Formaufnahmeeinheit
8       Temperiereinrichtung
9       Vernetzungseinheit
10      Vorrichtung zur Herstellung eines Formkörpers

100     Formkörper


## Patentansprüche

1. Verfahren zur Herstellung eines Formkörpers (100) aus nicht-thermoplastischem Elastomermaterial (1) aus mindestens einer Schicht mit nachfolgenden Schritten:

> a) Zuführen eines Elastomermaterials (1) zu einer Aufbereitungseinheit (2)
> b) Aufbereitung des Elastomermaterials (1) in der Aufbereitungseinheit (2), nämlich thermische und stoffliche Homogenisierung, und Erzeugung eines Materialstroms des Elastomermaterials (1)
> c) Fördern des Elastomermaterials (1) in eine Speichereinheit (4) und Erzeugung eines Vordrucks des Elastomermaterials (1) in der Speichereinheit (4)
> d) Fördern des Elastomermaterials (1) zu einer Formeinheit (5) ausgeführt als getaktete Düse (6), in welcher das Elastomermaterial (1) gezielt in sequenzieller Form in Form einer Perlenkette ausgebracht wird zur Erzeugung von mindestens einer Schicht des zu bildenden Formkörpers (100)
> e) Vernetzung der mindestens einen Schicht des Formkörpers (100) oder des gesamten Formkörpers (100) durch eine Vernetzungseinheit (9) wobei

das Elastomermaterial (1) während den Schritten a) bis d) hochviskos und vernetzbar ist und das Elastomermaterial eine Viskosität im Bereich von 100 bis 1.000.000 Pa s aufweist.

2. Verfahren nach einem der vorangehenden Ansprüche **dadurch gekennzeichnet, dass**
das Elastomermaterial (1) nicht verfestigbar ist und elastisch oder viskoelastisch ist.

3. Verfahren nach einem der vorangehenden Ansprüche, wobei das Elastomermaterial (1) als ACM, NBR, EPDM oder HCR ausgeführt ist.

4. Verfahren nach einem der vorangehenden Ansprüche, wobei in Schritt b) die Aufbereitung des Elastomermaterials (1) unter Verwendung einer oder mehrerer Schnecken (3) und/oder einer Kolbenpumpe und/oder einer Zahnradpumpe und/oder eines statischen Mischers erfolgt.

5. Verfahren nach einem der vorangehenden Ansprüche, wobei in Schritt b) und/oder in Schritt d) eine Kontrolle und Regelung der Temperatur des Elastomermaterials (1) erfolgt auf unter 150°C, insbesondere auf unter 90°C.

6. Verfahren nach Anspruch 5 **dadurch gekennzeichnet, dass** die Aufbereitungseinheit (2) und/oder die Formeinheit (5) eine Temperiereinrichtung (8) besitzen zum Kühlen und/oder Erhitzen des Elastomermaterials (1).

7. Verfahren nach einem der vorangehenden Ansprüche, wobei das Elastomermaterial (1) im Bereich der Düse (6) eine Schergeschwindigkeit von 10 bis 5500 1/s aufweist.

8. Verfahren nach einem der vorangehenden Ansprüche, wobei in den Schritten d) und e) eine Relativbewegung zwischen der Formeinheit (5) bzw. der Vernetzungseinheit (9) und einer Formaufnahmeeinheit (7) erfolgt zur Positionierung des ausgebrachten Elastomermaterials (1) bzw. zur Positionierung des Wirkbereichs der Vernetzungseinheit (9).

9. Verfahren nach einem der vorangehenden Ansprüche, wobei die Schritte d) und e) abwechselnd wiederholt werden, um einzelne Schichten des Formkörpers (100) aufzubauen und zu vernetzen.

10. Verfahren nach einem der vorangehenden Ansprüche, mit einem zusätzlichen Schritt

d') Ausbringen von Stützmaterial zur Erzeugung eines Stützbereichs wobei die Schritte d) und d') abwechselnd erfolgen, abhängig von der Geometrie des zu erzeugenden Formkörpers (100).

**Claims**

1. Method for producing a shaped article (100) from non-thermoplastic elastomer material (1), composed of at least one layer, with steps as below:

   a) supplying an elastomer material (1) to a processing unit (2)
   b) processing the elastomer material (1) in the processing unit (2), specifically thermally and physically homogenizing, and generating a material flow of the elastomer material (1)
   c) conveying the elastomer material (1) into an accumulator unit (4) and generating an admission pressure of the elastomer material (1) in the accumulator unit (4)
   d) conveying the elastomer material (1) to a shaping unit (5) embodied as a cycled die (6), in which the elastomer material (1) is delivered selectively in sequential form in the form of a chain of beads to generate at least one layer of the shaped article (100) to be formed
   e) crosslinking the at least one layer of the shaped article (100) or of the entire shaped article (100) by a crosslinking unit (9), wherein

   the elastomer material (1) is high-viscosity and crosslinkable during steps a) to d) and the elastomer material has a viscosity in the range from 100 to 1 000 000 Pa·s.

2. Method according to one of the preceding claims, **characterized in that**
   the elastomer material (1) is not solidifiable and is elastic or viscoelastic.

3. Method according to one of the preceding claims, wherein
   the elastomer material (1) is embodied as ACM, NBR, EPDM or HCR.

4. Method according to one of the preceding claims, wherein
   in step b) the elastomer material (1) is processed using one or more screws (3) and/or a piston pump and/or a gear pump and/or a static mixer.

5. Method according to one of the preceding claims, wherein
   in step b) and/or in step d) the temperature of the elastomer material (1) is monitored and regulated to below 150°C, more particularly to below 90°C.

6. Method according to Claim 5, **characterized in that** the processing unit (2) and/or the shaping unit (5) possess a temperature control device (8) for cooling and/or heating the elastomer material (1).

7. Method according to one of the preceding claims, wherein
   the elastomer material (1) in the region of the die (6) has a shear rate of 10 to 5500 1/s.

8. Method according to one of the preceding claims, wherein
   in steps d) and e) a relative movement between the shaping unit (5) or the crosslinking unit (9) and a shape-receiving unit (7) takes place to position the delivered elastomer material (1) or to position the effective region of the crosslinking unit (9).

9. Method according to one of the preceding claims, wherein
   steps d) and e) are repeated alternately to build up and to crosslink individual layers of the shaped article (100) .

10. Method according to one of the preceding claims, having an additional step of d') delivering support material to generate a support region,
    wherein steps d) and d') take place alternately, depending on the geometry of the shaped article (100) to be generated.

**EP 3 959 062 B1**

**Revendications**

1. Procédé de fabrication d'un objet moulé (100) à partir d'un matériau élastomère non thermoplastique (1), à partir d'au moins une couche, comportant les étapes suivantes :

    a) amenée d'un matériau élastomère (1) à une unité de préparation (2)
    b) préparation du matériau élastomère (1) dans l'unité de préparation (2), plus précisément homogénéisation thermique ou matérielle, et production d'un courant du matériau élastomère (1)
    c) transport du matériau élastomère (1) dans une unité de stockage (4) et production d'une ébauche du matériau élastomère (1) dans l'unité de stockage (4)
    d) transport du matériau élastomère (1) vers une unité de moulage (5) conçue comme une buse cadencée (6), dans laquelle le matériau polymère (1) est éjecté d'une manière ciblée sous forme séquentielle sous forme d'une chaîne de perles pour la production d'au moins une couche de l'objet moulé (100) à former
    e) réticulation de l'au moins une couche de l'objet moulé (100) ou de la totalité de l'objet moulé (100) par une unité de réticulation (9), dans lequel

    le matériau élastomère (1) est très visqueux et réticulable pendant les étapes a) à d), et le matériau élastomère présente une viscosité dans la plage de 100 à 1 000 000 Pa·s.

2. Procédé selon l'une quelconque des revendications précédentes, **caractérisé en ce que** le matériau élastomère (1) n'est pas solidifiable et est élastique ou viscoélastique.

3. Procédé selon l'une quelconque des revendications précédentes, dans lequel le matériau élastomère (1) est conçu en tant que ACM, NBR, EPDM ou HCR.

4. Procédé selon l'une quelconque des revendications précédentes, dans lequel dans l'étape b) la préparation du matériau élastomère (1) a lieu par utilisation d'une ou plusieurs vis sans fin (3) et/ou d'une pompe à piston et/ou d'une pompe à engrenage et/ou d'un mélangeur statique.

5. Procédé selon l'une ou plusieurs des revendications précédentes, dans lequel dans l'étape b) et/ou dans l'étape d), on procède à un contrôle et à une régulation de la température du matériau élastomère (1) à moins de 150 °C, en particulier moins de 90 °C.

6. Procédé selon la revendication 5, **caractérisé en ce que** l'unité de préparation (2) et/ou l'unité de moulage (5) comprennent un dispositif de thermorégulation (8), pour le refroidissement et/ou le chauffage du matériau élastomère (1).

7. Procédé selon l'une quelconque des revendications précédentes, dans lequel le matériau élastomère (1) présente dans la zone de la buse (6) une vitesse de cisaillement de 10 à 5 500 1/s.

8. Procédé selon l'une quelconque des revendications précédentes, dans lequel dans les étapes d) et e), on procède à un déplacement relatif entre l'unité de moulage (5) ou l'unité de réticulation (9) et une unité de logement de moule (7), pour positionner le matériau élastomère éjecté (1) ou pour positionner la zone de travail de l'unité de réticulation (9).

9. Procédé selon l'une quelconque des revendications précédentes, dans lequel les étapes d) et e) sont répétées en alternance, pour construire et réticuler des couches individuelles de l'objet moulé (100).

10. Procédé selon l'une quelconque des revendications précédentes, comportant une étape supplémentaire d') éjection d'un matériau de soutien pour produire une zone de soutien, les étapes d) et d') étant mises en œuvre en alternance, en fonction de la géométrie de l'objet moulé (100) à produire.

Fig. 1

**EP 3 959 062 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009030099 A1
- EP 1886793 B1
- EP 278274281 B1
- WO 2018153467 A1
- US 20180208797 A1
- WO 2019063094 A1